# FASCICULE DE BREVET EUROPEEN

(11) **EP 2 004 525 B1**
(45) Date de publication et mention de la délivrance du brevet: **05.10.2011**
(21) Numéro de dépôt: 07731283.3
(22) Date de dépôt: 12.04.2007
(51) Int. Cl.: B65G 47/14, B29C 49/42

(54) **DISPOSITIF D'ALIMENTATION DE PREFORMES A GRANDE CADENCE**
VORFORMLINGZUFÜHRVORRICHTUNG MIT HOHEM DURCHSATZ
HIGH-RATE PREFORM FEEDER DEVICE

(30) Priorité: 12.04.2006 FR 0603223
(43) Date de publication de la demande: 24.12.2008
(73) Titulaire: Sidel Participations, 76930 Octeville Sur Mer (FR)
(72) Inventeur: CHARPENTIER, Alain, F-76930 Octeville sur Mer (FR); LEROUX, Eric, F-76930 Octeville sur Mer (FR); PERROT, Gérard, F-76930 Octeville sur Mer (FR)
(74) Mandataire: Demulsant, Xavier
(86) Numéro de dépôt international: PCT/FR2007/000615
(87) Numéro de publication internationale: WO 2007/116155

(56) Documents cités:
- EP-A- 0 305 355
- WO-A-89/05273
- FR-A1- 2 539 721
- JP-A- 11 240 615
- JP-A- 2005 272 114
- US-A- 4 007 854
- US-A- 4 705 156
- US-A1- 2003 010 605

## Description

L'invention se rapporte au domaine technique des procédés de fabrication de corps creux en matériau thermoplastique, notamment récipients tels que pots, flacons ou bouteilles, procédés dans lesquels on fabrique d'abord une préforme par injection avant d'obtenir le récipient final au cours d'une étape de soufflage ou étirage-soufflage.

L'invention trouve une application avantageuse dans les installations de soufflage de récipients, par exemple en polyéthylène téréphtalate (PET) à partir de préformes préalablement moulées par injection, préformes qui sont introduites dans un four de conditionnement thermique, constituant une partie de l'installation, avant d'être transférées vers la zone de soufflage proprement dite de l'installation.

On rappelle qu'une préforme est un objet sensiblement tubulaire fermé à une extrémité axiale et dont l'ouverture présente la forme définitive du corps creux final.

Depuis quelques années, la fabrication de récipients en matière plastique à partir de préformes préalablement injectées a connu un essor considérable, notamment grâce à l'emploi du polyéthylène téréphtalate (PET). Entre temps, d'autres matériaux ont été envisagés et/ou utilisés avec plus ou moins de succès tels, à titre d'exemple non limitatifs, le polyéthylène naphtalate (PEN), le polypropylène (PP), ou des mélanges ou superpositions de divers matériaux.

Dans l'installation de soufflage, les préformes sont déversées en vrac dans un bac ou trémie. Elles sont conventionnellement prélevées de ce bac par un tapis élévateur qui vient les déverser à l'extrémité supérieure d'une trémie d'alignement. Les préformes glissent vers le fond de la trémie où elles sont récupérées dans un rail d'alimentation, lui-même relié à la machine de soufflage.

Les installations de soufflage à grande cadence comportent conventionnellement un grand nombre d'unités de soufflage ou d'étirage soufflage montées sur une machine tournante de type carrousel.

Les installations de soufflage à carrousel permettent d'obtenir de fortes cadences de production. Ainsi, par exemple, pour un matériau tel que le PET, il est possible de produire, par étirage soufflage, plus de 1500 récipients par heure et par moule.

Une opération particulièrement délicate consiste, en partant de préformes en vrac, à les orienter correctement pour leur entrée dans la machine de soufflage. Cette opération est complexe pour les souffleuses actuelles fonctionnant à une cadence pouvant atteindre 50 000 bouteilles par heure.

La demanderesse a développé des trémies de démêlage et d'alignement ainsi que des rails d'alimentation en préformes pour machines de soufflage, comprenant pour certains des dispositifs d'éjection avec des moyens permettant l'évacuation des préformes mal orientées ou imbriquées, emboîtées, ces moyens étant décrits par exemple dans les documents FR 2 675 481, FR 2 816 297 et FR 2 864 051.

Les rails d'alimentation en préformes comprennent deux rouleaux parallèles motorisés tournant en sens inverse et inclinés par rapport au sol. L'écartement entre les rouleaux est réglable et calculé pour laisser passer le corps des préformes mais pas leur collerette. Les préformes sont déversées en haut des rouleaux et viennent se loger entre les rouleaux, sous l'effet de la gravité. L'inclinaison des deux rouleaux et leur rotation permet aux préformes, suspendues par leur collerette, de se déplacer.

Il existe une demande de machines de soufflage permettant des cadences de fabrication très supérieures à celles actuellement atteintes.

La demanderesse a constaté que, pour alimenter une souffleuse à cadence de fabrication de 80 000 bouteilles par heure ou plus, il est nécessaire de prévoir des rails d'alimentation d'une très grande longueur, de sorte à constituer une zone tampon d'alimentation des préformes. Les dispositifs d'alignement ou encore les dispositifs d'éjection de préformes mal positionnées provoquent en effet des irrégularités dans les flux de préformes.

Or, il est important de disposer d'un nombre sensiblement constant de préformes en entrée de machine de soufflage.

La mise en oeuvre des rails d'alimentation de grande longueur a pour résultat de devoir placer le système d'orientation des préformes à plusieurs mètres au dessus du sol. Les interventions des opérateurs et la maintenance sont désagréables à des hauteurs de plusieurs mètres.

La mise en oeuvre de rails d'alimentation de grande longueur conduit par ailleurs à un encombrement important au sol.

Une autre solution, envisagée pour permettre de hautes cadences, a été de mettre en parallèle deux dispositifs dont les rails de sortie aboutissent en un point de jonction. Toutefois, cette solution pose des problèmes au niveau de la jonction où certaines préformes peuvent se coincer.

Pour tenter de résoudre les problèmes des diverses solutions connues, le document FR 2 850 641 propose la mise en place d'un réceptacle cylindrique pourvu de deux plateaux superposés tournant au dessus d'une plaque de glissement circulaire inclinée, les deux plateaux tournant en sens inverse l'un de l'autre. Le plateau supérieur est d'un diamètre plus faible que le plateau inférieur. Le plateau inférieur est pourvu d'alvéoles dimensionnées pour ne pouvoir contenir qu'une seule préforme. La plaque de glissement est pourvue, en partie haute du réceptacle, d'une fente oblongue sur un secteur d'arc d'environ 90°. Les préformes sont déversées en partie basse du réceptacle, zone dans laquelle les préformes viennent se loger dans les alvéoles du plateau inférieur. Lorsque une alvéole logeant une préforme vient en regard de la fente de la plaque de glissement, la préforme bascule puis tombe du réceptacle.

Le dispositif décrit dans le document FR 2 850 641 présente des inconvénients.

En premier lieu, ce dispositif ne peut être employé pour différents types de préformes. La fente oblongue de basculement des préformes a deux largeurs bien déterminées pour un type de préforme donnée : la première largeur est inférieure au diamètre de la collerette mais supérieure au diamètre du corps de la préforme.

De plus, le remplissage des alvéoles s'effectue au point bas du réceptacle incliné, ce point bas constituant une zone d'accumulation dans laquelle viendront stagner les préformes imbriquées et emboîtées, sans que l'opérateur puisse immédiatement les voir. Le document WO 89/05273 décrit un dispositif d'alimentation centrifuge selon le préambule de la revendication 1, pour l'alimentation de pièces allongées telles que des seringues.

L'invention vise à pallier les problèmes mentionnés ci-dessus, en proposant un nouveau dispositif d'alimentation en préformes pour machines de soufflage qui puisse, le cas échéant, atteindre de très hautes cadences, pouvant par exemple dépasser les 80 000 préformes par heure.

L'invention concerne, selon un premier aspect, un dispositif d'alimentation centrifuge selon la revendication 1.

Ainsi, par « largeur utile », on désigne ici la largeur de la surface de l'anneau ou d'une partie de l'anneau employée lors du fonctionnement du dispositif, cette largeur étant mesurée suivant une direction radiale à l'axe de rotation de l'anneau.

Dans une mise en oeuvre, les moyens permettant de régler la totalité ou la portion de la largeur utile de l'anneau sont constitués par des moyens de déplacement du guide latéral ; ils comportent des tronçons courbes de guide montés en coulissement radial sur un support solidaire de l'enceinte.

Dans une réalisation particulière avantageuse, l'anneau est tronconique, de sorte que son rebord intérieur est à un niveau supérieur à son rebord extérieur.

Dans une mise en oeuvre avantageuse, le dispositif comprend des moyens permettant de régler indépendamment la vitesse de rotation de l'anneau et du disque, l'anneau tournant dans le même sens que le disque et à une vitesse sensiblement égale ou supérieure à celle du disque.

L'invention concerne, selon un deuxième aspect, une machine de soufflage de récipients, notamment en PET ou PEN, cette machine comprenant un dispositif tel que présenté ci-dessus, pour son alimentation en préformes.

D'autres objets et avantages de l'invention apparaîtront au cours de la description suivante de modes de réalisation, donnés à titre d'exemples non limitatifs, cette description étant effectuée à la lumière des dessins annexés, dans lesquels :
- la figure 1 est une vue en perspective schématique d'un dispositif d'alimentation centrifuge en préformes selon l'invention :
- la figure 2 est une vue de détail d'un dispositif selon l'invention ;
- les figures 3 à 5 sont trois vues en perspective selon trois angles de vue d'une partie d'un dispositif d'alimentation selon un mode de mise en oeuvre de l'invention.

Le dispositif **1** représenté comprend une enceinte **2** cylindrique fixe, cette enceinte **2** recevant intérieurement un anneau **3** et un disque **4** tournant chacun dans l'enceinte **2.**

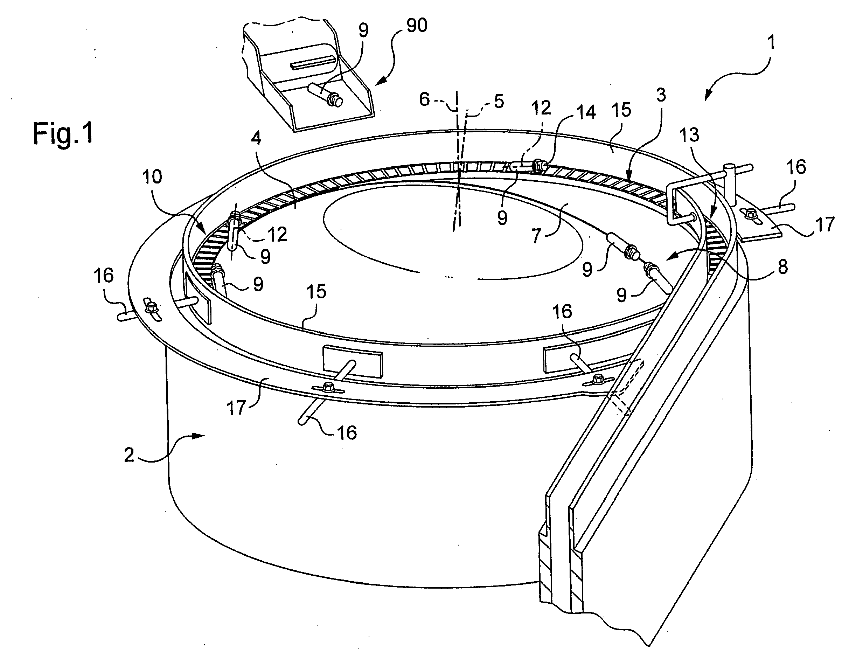

L'axé **5** de rotation du disque **4** est incliné par rapport à l'axe **6** de rotation de l'anneau **3,** de sorte que le disque **4** est incliné par rapport à l'anneau **3.** Dans l'exemple illustré en figure 1, l'axe **6** de rotation de l'anneau **3** est sensiblement vertical, c'est-à-dire que l'anneau **3** s'étend dans un plan sensiblement horizontal. Dans une mise en oeuvre, l'angle d'inclinaison entre les deux axes est d'environ dix degrés.

La projection du rebord intérieur de l'anneau **3** parallèlement à son axe **6** de rotation délimite un cylindre virtuel, d'axe **6,** dans lequel le disque **4** est circonscrit. Le disque **4** est disposé de façon telle qu'une portion de son bord, dans la zone référencée **10** sur la figure 1, est située à proximité du rebord intérieur de l'anneau **3,** sensiblement au niveau du plan supérieur de ce dernier, et la portion du disque diamétralement opposée est située à un niveau inférieur. En d'autres termes, au niveau de la zone **10,** le disque **4** et l'anneau **3** sont sensiblement tangents l'un à l'autre. Une paroi latérale **7,** dont le rebord supérieur, sensiblement circulaire, est situé à proximité de et en regard du rebord inférieur de l'anneau **3,** entoure le disque **4** au plus près. Ainsi, du fait de l'inclinaison du disque **4** relativement à l'anneau **3,** le disque **4** et la paroi latérale définissent un creux constituant une zone de chargement **8** dans laquelle les préformes **9** peuvent être déversées en vrac, par exemple par une bande transporteuse ou tout autre moyen, tel que celui schématisé sous la référence **90** sur la figure 1, en parvenant au dessus de la zone de chargement **8.**

Comme on le comprendra plus loin, la zone **10** constitue une zone de transfert des préformes **9** entre le disque **4** et l'anneau **3.**

Un guide latéral 15, qui sera décrit en détail ultérieurement, est disposé relativement à l'anneau **3,** de façon à constituer une butée périphérique permettant au préformes **9** de rester sur l'anneau **3.**

L'anneau **3** présente une largeur radiale réglable, par le biais de moyens qui seront décrits en détail par la suite, permettant de déplacer le guide **15** sur la totalité ou sur une portion de l'anneau **3.** L'anneau **3** présente également des crans ou saillies radiales **3a,** régulièrement réparties sur son pourtour.

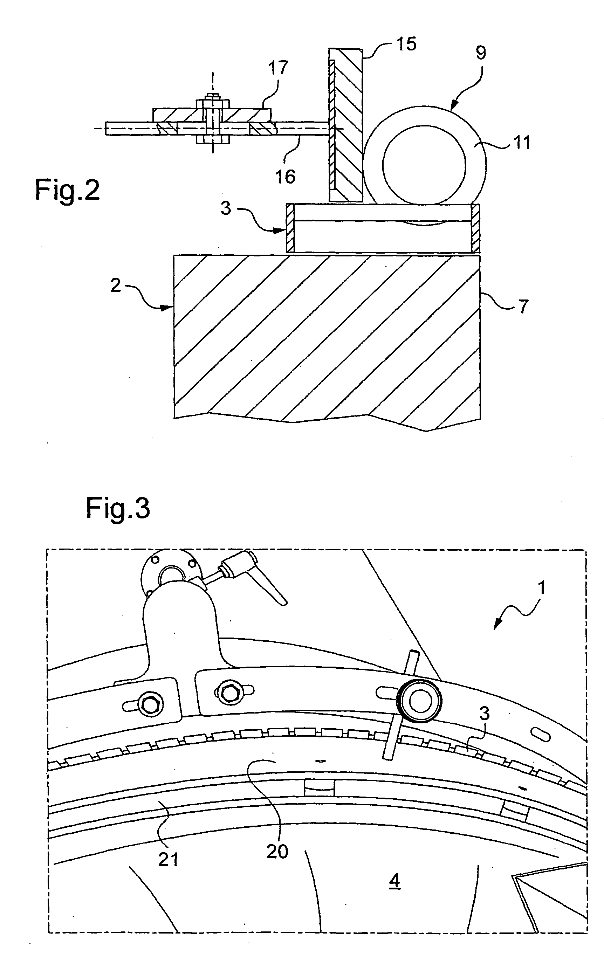

Pour un type de préformes données, l'opérateur règle la totalité ou une portion de la largeur de l'anneau **3,** de telle sorte que cette largeur soit sensiblement égale au diamètre maximum des préformes **9** chargées dans le dispositif. Ce diamètre maximum correspond le plus souvent au diamètre externe de la collerette **11** (visible en figure 2) des préformes **9.** Ce réglage a pour effet d'éviter que deux préformes **9** se trouvent côte à côte sur l'anneau **3.** La largeur ainsi obtenue est appelée « largeur utile » de l'anneau **3.**

L'anneau **3** et le disque **4** sont mis en rotation par tous moyens moteurs appropriés, des moyens permettant le réglage séparé de la vitesse de rotation de l'anneau **3** et du disque **4.**

Dans un mode de mise en oeuvre, le diamètre de l'anneau **3** est de l'ordre de deux mètres, la vitesse de rotation de l'anneau **3** de l'ordre de soixante tours par minute, et de préférence celle du disque **4** est légèrement inférieure.

Le rotation du disque **4** provoque le déplacement des préformes depuis la zone de chargement **8** jusque vers la zone de transfert **10.**

Au niveau de cette zone de transfert **10,** la force centrifuge exercée par la rotation du disque **4** fait passer les préformes **9** sur l'anneau **3** et la présence de crans sur l'anneau **3** provoque l'accrochage des collerettes **11** des préformes **9** sur cet anneau **3.** Suite à l'accrochage, la rotation de l'anneau **3,** à une vitesse avantageusement supérieure à celle du disque **4,** a pour effet d'amener chaque préforme **9** à reposer complètement sur l'anneau **3,** l'axe d'élancement **12** de la préforme **9** étant sensiblement perpendiculaire à l'axe de révolution de l'enceinte **2.** De plus, pour contrer la force centrifuge exercée par la rotation de l'anneau **4,** il est prévu un guide latéral **15** entourant au moins partiellement l'anneau **3** et qui sera décrit plus en détail ultérieurement. De préférence, l'anneau **3** est conique, et la conicité est telle que le rebord intérieur de l'anneau **3** est à un niveau supérieur au rebord extérieur, de sorte que lors de l'arrêt du dispositif **1,** les préformes **9** se trouvant sur l'anneau **3** restent maintenues sur l'anneau **3,** en venant se mettre en butée contre le guide latéral, par leur propre poids.

Du fait de la distance séparant la zone de chargement **8** et la zone de transfert **10,** la rotation du disque **4** a pour effet d'amener un grand nombre de préformes **9** en une position favorable au transfert vers l'anneau **3,** l'axe d'élancement **12** de ces préformes **9** étant déjà sensiblement perpendiculaire à l'axe de révolution **6** de l'enceinte **2** lorsque ces préformes **9** glissent le long de la paroi latérale **7** de l'enceinte **2.**

Les préformes **9** qui ne sont pas positionnées avec leur axe d'élancement **12** tangent à l'anneau **3** se trouvent en déséquilibre dans la zone de transfert **10,** et retombent sur le disque **4.**

Les préformes entraînées par l'anneau **3** sortent du dispositif 1 par un canal **13** de sortie dont l'entrée est située au dessus de l'anneau **3** et dont un côté est placé dans le prolongement du guide latéral **15** susmentionné, qui sera décrit en détail ultérieurement. Il est à noter que les préformes entrent dans ce canal de sortie aléatoirement avec leur ouverture **14** placée vers la sortie ou à l'opposé de la sortie du **canal 13.**

Dans l'exemple, l'entrée du canal **13** est dans une zone sensiblement diamétralement opposée à la zone de transfert **10.** Il est à noter que la disposition diamétralement opposée n'est pas limitative : il convient avant tout que l'entrée **13** soit éloignée de la zone de transfert **10** de façon telle que, statistiquement, un nombre suffisant de préformes **9** y parviennent correctement stabilisées eu égard à la cadence souhaitée.

L'on décrit maintenant les moyens permettant de régler la largeur utile de l'anneau **3,** pour l'adapter à différentes tailles de préformes **9.**

Le dispositif **1** comprend un guide latéral **15** susmentionné qui est formé de tronçons sensiblement identiques et en arc de cercle. Ce guide latéral **15** forme surface latérale circulaire d'appui des préformes **9** entraînées par l'anneau **3.** Les tronçons de guide latéral **15** sont montés, via des tiges radiales **16,** sur un support externe **17** solidaire de l'enceinte **2.** Le coulissement radial de ces tiges **16** par rapport au support externe **17** permet de modifier la largeur sur tout ou partie de l'anneau **3** tournant laissé accessible aux préformes **9.** En d'autres termes, le guide latéral **15** permet de modifier la largeur du trottoir formé par l'anneau **3,** trottoir mobile sur lequel sont entraînées les préformes **9** dans la zone de transfert **10.**

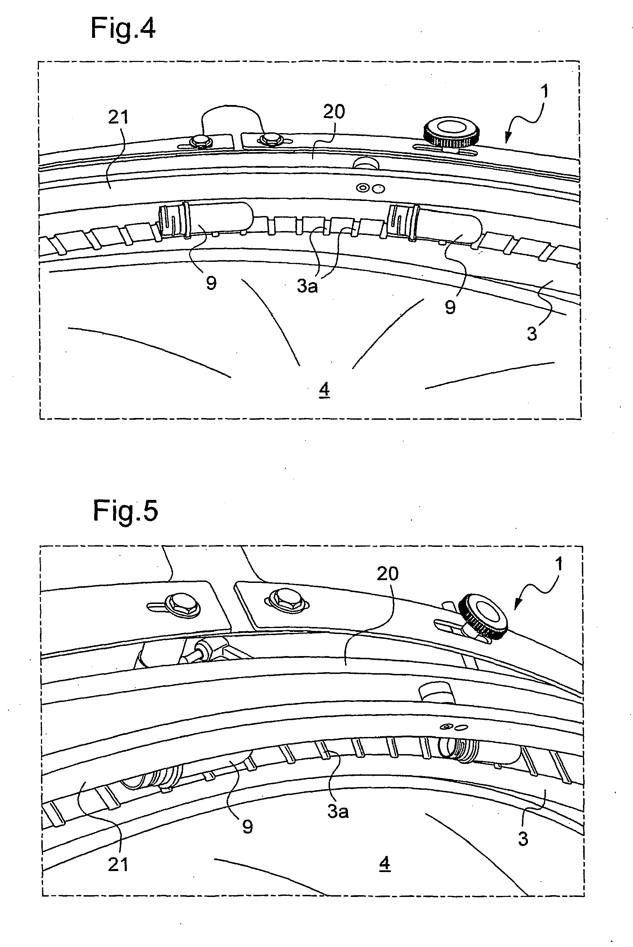

L'on se reporte maintenant aux figures 3 à 5.

Tout comme celui représenté en figure 1, le dispositif **1** représenté de manière partielle et en perspective sur ces figures 3 à 5 comprend une enceinte **2,** un anneau 3 et un disque **4,** ce disque **4** étant conique. Une forme conique pour le disque **4** facilite le transfert des préformes **9** du disque vers l'anneau **3,** dans la zone de transfert **10.**

Le dispositif **1** représenté en figures 3 à 5 comprend un guide latéral **20** extérieur, définissant une largeur utile maximum. Un guide **21** forme un secteur angulaire contrôlant le passage de la préforme **9** vers l'anneau **3.** La position de ce guide **21** dans l'enceinte **2** est réglable.

L'anneau **3** est avantageusement tronconique, ainsi qu'il a été dit précédemment. Dans une mise en oeuvre, l'axe **6** de rotation de l'anneau **3** est sensiblement vertical. Dans d'autres modes de réalisation, l'axe **6** de rotation de l'anneau **3** est incliné par rapport à la verticale, tout comme l'axe **5** de rotation du disque **4.** Ainsi, les préformes ne sortent pas nécessairement à l'horizontale du dispositif qui peut ainsi alimenter un convoyeur incliné.

Le dispositif présente de nombreux avantages.

En premier lieu, il permet une alimentation en préformes à très haute cadence. En théorie, avec les valeurs numériques évoquées auparavant (diamètre de deux mètres, vitesse de l'anneau à soixante tours par minute), il est possible de distribuer plus de deux cent mille préformes de dix centimètres de longueur par heure, en supposant que les préformes soient transférées sur l'anneau à la queue leu leu. Pratiquement on dépasse largement les quatre vingt mille préformes par heure qui n'étaient pas atteignables par les dispositifs connus jusqu'alors.

Les préformes **9** sont transportées sur l'anneau **3** sensiblement à l'horizontale et ne sont basculées qu'après sortie du dispositif.

De plus, l'enceinte peut être placée à l'horizontale et près du sol, les interventions de maintenance et de dépannage étant ainsi aisées.

Le réglage de la largeur utile de l'anneau ou d'une partie de l'anneau permet d'adapter le dispositif à différentes préformes ou autres objets analogues.

## Revendications

1. Dispositif d'alimentation centrifuge comprenant une enceinte **(2)** extérieure recevant d'une part un anneau **(3)** monté en rotation dans l'enceinte **(2)** et s'étendant dans un plan sensiblement horizontal, et d'autre part un disque **(4)** monté en rotation à l'intérieur dudit anneau **(3),** l'axe **(5)** de rotation du disque **(4)** étant incliné par rapport à l'axe **(6)** de rotation de l'anneau **(3),** le disque **(4)** et l'anneau **(3)** étant sensiblement tangents l'un à l'autre dans une zone de transfert **(10)** et étant distants l'un de l'autre dans une zone de chargement **(8)** située à un niveau inférieur à celui de la zone de transfert **(10),** l'anneau **(3)** étant entouré par un guide latéral **(15)** déterminant, avec le rebord intérieur de l'anneau **(3),** une largeur utile de l'anneau **(3),** l'anneau **(3)** desservant un canal **(13)** de sortie dont l'entrée est située au dessus d'une partie de largeur utile de l'anneau et le dispositif comprenant de plus des moyens permettant de régler la largeur utile de l'anneau **(3), caractérisé en ce que** l'anneau **(3)** est pourvu de crans **(3a)** sensiblement radiaux, et **en ce qu'** une paroi latérale **(7)** de l'enceinte **(2),** dont le rebord supérieur, sensiblement circulaire, est situé à proximité de et en regard du rebord inférieur de l'anneau **(3),** entoure le disque **(4)** au plus près, de manière à définir avec le disque incliné **(4)** un creux constituant la zone de chargement **(8).**

2. Dispositif selon la revendication 1, **caractérisé en ce que** les moyens permettant de régler la largeur utile de l'anneau sont constitués par des moyens de déplacement du guide latéral **(15).**

3. Dispositif selon la revendication 2, **caractérisé en ce que** les moyens de déplacement du guide latéral **(15)** comportent des tronçons courbes de guide, montés en coulissement radial sur un support **(17)** solidaire de l'enceinte **(2).**

4. Dispositif selon l'une quelconque des revendications précédentes, **caractérisé en ce que** l'anneau **(3)** est tronconique, de sorte que son rebord intérieur est à un niveau supérieur à son rebord extérieur.

5. Dispositif selon l'une quelconque des revendications précédentes, **caractérisé en ce qu'**il comprend des moyens permettant de régler indépendamment la vitesse de rotation de l'anneau **(3)** et du disque **(4),** l'anneau **(3)** tournant dans le même sens que le disque **(4)** et à une vitesse sensiblement égale ou supérieure à celle du disque **(4).**

6. Machine de soufflage de récipients, notamment en PET ou PEN, cette machine comprenant un dispositif tel que présenté dans l'une quelconque des revendications précédentes, pour son alimentation en préformes.

## Claims

1. Centrifugal feeder device comprising an outer enclosure (2) which accommodates both a ring (3) mounted rotatably in the enclosure (2) and lying in an approximately horizontal plane, and a disc (4) mounted rotatably inside said ring (3), the axis (5) of rotation of the disc (4) being inclined with respect to the axis (6) of rotation of the ring (3), the disc (4) and the ring (3) being substantially tangent to each other in a transfer area (10) and being spaced from each other in a loading area (8) located at a lower level than the level of the transfer area (10), the ring (3) being surrounded by a lateral guide (15) which determines, with the inner edge of the ring (3), a useable width of the ring (3), the ring (3) supplying an outlet channel (13) whose inlet is situated above a part of useable width of the ring, and the device further comprising means for adjusting the useable width of the ring (3), **characterized in that** the ring (3) is provided with substantially radial notches (3a), and **in that** a lateral wall (7) of the enclosure (2) whose upper edge, substantially circular, is located in the vicinity of and opposite the lower edge of the ring (3), surrounds the disc (4) as close as possible, so as to define, with the inclined disc (4), a recess constituting the loading area (8).

2. Device according to claim 1, **characterized in that** the means for adjusting the useable width of the ring are constituted of the means for displacing the lateral guide (15).

3. Device according to claim 2, **characterized in that** the means for displacing the lateral guide (15) comprise guide curved sections, slidably mounted on a support (17) affixed to the enclosure (2).

4. Device according to any of the previous claims, **characterized in that** the ring (3) is truncated so that its inner edge is at a higher level than the level of its outer edge.

5. Device according to any of the previous claims, **characterized in that** it comprises means for independently adjusting the rotation speed of the ring (3) and of the disc (4), the ring (3) rotating in the same direction than the disc (4) and at a speed that is substantially equal to or greater than that of the disc (4).

6. Blowing machine for containers, particularly of PET or PEN, this machine comprising a device such as presented above, for feeding it with preforms.

## Patentansprüche

1. Zentrifugal-Beschickungsvorrichtung, die ein Außengehäuse (2) umfasst, das einerseits einen Ring (3), der drehbar in dem Gehäuse (2) montiert ist und sich in einer im Wesentlichen horizontalen Ebene erstreckt, und andererseits eine Scheibe (4) aufnimmt, die drehbar im Inneren des Rings (3) montiert ist, wobei die Drehachse (5) der Scheibe (4) in Bezug auf die Drehachse (6) des Rings (3) geneigt ist, die Scheibe (4) und der Ring (3) in einer Transferzone (10) im Wesentlichen aneinander anliegen und in einer Befüllzone (8), die sich auf einer niedrigeren Höhe als die der Transferzone (10) befindet, voneinander entfernt sind, der Ring (3) von einer seitlichen Führung (15) umgeben wird, die mit der Innenkante des Rings (3) eine nutzbare Breite des Rings (3) bestimmt, der Ring (3) einen Austrittskanal (13) bedient, dessen Eingang sich über einem Teil der nutzbaren Breite des Rings befindet, und die Vorrichtung außerdem Mittel umfasst, die das Einstellen der nutzbaren Breite des Rings (3) ermöglichen, **dadurch gekennzeichnet, dass** der Ring (3) mit im Wesentlichen radialen Zacken (3a) versehen ist und dass eine Seitenwand (7) des Gehäuses (2), dessen im Wesentlichen kreisförmige obere Kante sich in der Nähe und gegenüber der unteren Kante des Rings (3) befindet, die Scheibe (4) so nah wie möglich umgibt, um mit der geneigten Scheibe (4) einen Hohlraum zu definieren, der die Befüllzone (8) bildet.

2. Vorrichtung nach Anspruch 1, **dadurch gekennzeichnet, dass** die Mittel, die das Einstellen der nutzbaren Breite des Rings ermöglichen, aus Mitteln zum Verschieben der seitlichen Führung (15) bestehen.

3. Vorrichtung nach Anspruch 2, **dadurch gekennzeichnet, dass** die Mittel zum Verschieben der seitlichen Führung (15) gekrümmte Führungsabschnitte umfassen, die radial gleitbar auf einer festen Halterung (17) des Gehäuses (2) montiert sind.

4. Vorrichtung nach einem der vorhergehenden Ansprüche, **dadurch gekennzeichnet, dass** der Ring (3) kegelförmig ist, so dass seine Innenkante auf einer Höhe ist, die über seiner Außenkante liegt.

5. Vorrichtung nach einem der vorhergehenden Ansprüche, **dadurch gekennzeichnet, dass** sie Mittel umfasst, die das unabhängige Einstellen der Drehgeschwindigkeit des Rings (3) und der Scheibe (4) ermöglichen, wobei der Ring (3) sich in derselben Richtung wie die Scheibe (4) und mit einer Geschwindigkeit, die im Wesentlichen gleich der oder höher als die der Scheibe (4) ist, dreht.

6. Blasmaschine für Behälter, insbesondere aus PET oder PEN, wobei diese Maschine eine wie in einem der vorhergehenden Ansprüche dargestellte Vorrichtung zu seiner Beschickung mit Vorformlingen umfasst.
